Europäisches Patentamt

European Patent Office

Office européen des brevets

(11) Veröffentlichungsnummer: **0 207 253**
**A1**

(12) **EUROPÄISCHE PATENTANMELDUNG**

(21) Anmeldenummer: 86106055.6

(22) Anmeldetag: 02.05.86

(51) Int. Cl.⁴: **G 01 N 27/12**
**G 01 M 3/40**

(30) Priorität: 09.05.85 CH 1972/85
02.12.85 CH 5126/85

(43) Veröffentlichungstag der Anmeldung:
07.01.87 Patentblatt 87/2

(84) Benannte Vertragsstaaten:
AT CH DE FR GB IT LI SE

(71) Anmelder: Meier-Schenk AG (Meier-Schenk SA)
Herrengütlistrasse 17
CH-8304 Wallisellen(CH)

(72) Erfinder: Casanova, Reto, Dr.
Sonneggstrasse 35
CH-8006 Zürich(CH)

(74) Vertreter: Hunziker, Jean
Patentanwaltsbureau Jean Hunziker Schulhausstrasse 12
CH-8002 Zürich(CH)

(54) Sensor zum Feststellen von Nassstellen in der thermischen Isolierung von Rohrleitungen.

(57) Ein mit einem externen Mess-, Anzeige- oder Alarmgerät verbundener Feuchtigkeitsfühler (2) umfasst zwei elektrisch leitende Platten (5,6) die zwischen sich einen Spalt (8) begrenzen. In diesem ist eine Schicht (7) angeordnet, die in trockenem Zustand die Platten (5,6) elektrisch voneinander isoliert, während in den Spalt (8) eindringende Feuchtigkeit die Platten elektrisch leitend verbindet. Der Feuchtigkeitsfühler (5,6,7) ist dampfdicht von einem Gehäuse (9,10) aus einem hydrolisierbarem oder wasserlöslichen Material umschlossen. Dieses Gehäuse (9, 10) muss zuerst zerstört werden, bevor Flüssigkeit in den Spalt (8) eindringen und ein Lecksignal erzeugen kann. Die Oberfläche der beiden leitenden Platten (5,6) besteht aus Nichtbuntmetallen und die zwischen diesen Platten angeordnete Schicht besteht aus einem nicht saugfähigen und nicht hygroskopischen Material, das gegen die beim Verschäumen von Polyurethan verwendeten bzw. frei werdenden Stoffe resistent ist.

Dadurch ist einerseits gewährleistet, dass erst bei einem ernsthaften Leck ein Störsignal ausgelöst wird, anderseits werden Schäden am Feuchtigkeitsfühler durch langsame Zersetzung unter der Einwirkung der beim Verschäumen der Wärmedämmschicht der Rohrleitung verwendeten bzw. frei werdenden Stoffe vermieden und die einwandfreie Funktion des Sensors auch nach sehr langer Zeit noch gewährleistet.

Fig. 1

1

## SENSOR ZUM FESTSTELLEN VON NASSSTELLEN IN DER THERMISCHEN ISOLIERUNG VON ROHRLEITUNGEN

Die Erfindung bezieht sich auf einen Sensor gemäss dem Oberbegriff des Patentanspruches 1.

Ein besonderes Anwendungsgebiet solcher Sensoren sind erdverlegte, thermisch isolierte Leitungen, z.B. Fernwärmeleitungen, bei denen das jeweils als Stahlrohr ausgebildete, mediumführende Innenrohr von einem Mantelrohr umschlossen und der Zwischenraum mit einem verschäumten Isoliermaterial, meist einem Polyurethan-Schaum ausgeschäumt ist. Da das Isoliermaterial in feuchtem Zustand seine wärmedämmende Eigenschaft einbüsst und für die Innenrohre die Gefahr der Korrosion besteht, wenn die sie umgebende Isolation durchfeuchtet ist, müssen Massnahmen getroffen werden, um das Auftreten von Nassstellen infolge von Undichtheiten der Rohrummantelung oder des Innenrohres, möglichst frühzeitig festzustellen und möglichst genau zu orten. Hierzu werden in Abständen in der Rohrleitung, z.B. alle 6, 12 oder 18 m Sensoren in die Wärmedämmschicht eingeschäumt, die ihrerseits über ebenfalls in die Wärmedämmung eingebettete elektrische Leitungen mit einem externen Mess-, Anzeige- oder Alarmgerät verbunden sind, welches eine allfällig auftretende Leckstelle anzeigt und ortet. Dieses Gerät kann z.B. ein Impuls-Echogerät sein.

Bei einer bekannten Ausführung eines Sensors der eingangs genannten Gattung bestehen die elektrisch leitenden Platten aus einem Buntmetall, insbesondere aus Messing oder aus Kupfer. Als in trockenem Zustand die beiden Platten elektrisch voneinander isolierende Schicht dient bei der genannten bekannten Ausführung ein elektrisch isolierendes, saugfähiges Material in Form eines Vlieses aus Cellulosefasern, z.B. ein Löschpapier. Dabei ist die Anordnung so getroffen, dass der Feuchtigkeitsfühler im trockenen Zustand einschliesslich des Wasseraufnahmematerials zwischen den Kontaktplatten den Kennwiderstand der verwendeten Leiter nicht wesentlich verändert, aber im feuchten Zustand, nämlich bei in den Spalt zwischen den Platten eindringender Feuchtigkeit einen erheblichen Nebenschluss zwischen den beiden Platten erzeugt, der über das Mess- und Anzeigegerät festgestellt und geortet werden kann.

Bei der Anwendung dieser bekannten Feuchtigkeitsfühler in der Praxis treten jedoch Schwierigkeiten insofern auf, als gehäuft Fehlalarme auftreten, indem das Anzeigegerät Feuchtstellen anzeigt, die nicht auf Undichtheiten zurückzuführen sind, aber als Folge des Alarms überprüft werden müssen. Dabei wurde gefunden, dass die falsche Leckanzeige darauf zurückzuführen ist, dass sich die bekannten Feuchtigkeitsfühler oder Teile davon unter Bildung eines schmierigen Belages langsam zersetzten, was auch zu deren Funktionsausfall führen kann. Solche Fehlalarme können aus dieser Ursache sehr spät, oft Jahre nach der Verlegung der Leitungen ausgelöst werden und sind nicht als solche zu erkennen. Sie zwingen daher regelmässig zu kostspieligen Freilegungen, die sich dann als unnötig erweisen. Auf der anderen Seite kann ein Funktionsausfall solcher Feuchtigkeitsfühler infolge Zersetzung dazu führen, dass tatsächliche Leckstellen nicht signalisiert werden.

Die Untersuchung der beschädigten Feuchtigkeitsfühler ergab, dass die zu einer braunen Paste degenerierte Schicht im Plattenspalt an den Platten klebte und beträchtliche Mengen Zinkchlorid ($Zn Cl_2$ und $Zn (OH) Cl$) sowie Ammoniumchlorid ($NH_4 Cl$) enthielt. Die Platten selbst waren lokal oder gesamthaft, oft auch an der dem Spalt abgewendeten Fläche stark angefressen und wiesen klare Zeichen von Entzinkung auf.

Die Feuchtigkeitsfühler der bekannten Ausführung weisen somit den Nachteil auf, dass die für die Platten und die isolierende Zwischenschicht verwendeten Materialien für den ungeschützten Einsatz in Rohrleitungen mit einer Wärmedämmschicht aus Polyurethan-Schaum ungeeignet sind, weil sie in diesem Milieu nur eine vergleichsweise kurze Zeit sicher funktionsfähig bleiben. Denn die bei der Verschäumung von Polyurethan verwendeten Katalysatoren können in Gegenwart von Buntmetallen, insbesondere von Kupfer, unter den Wärme- und Feuchtigkeitsbedingungen beim Verschäumvorgang die Hydrolyse des als Treibmittel verwendeten Frigens zu Salzsäure, Fluss-Säure u.ä. beschleunigen. Salzsäure aber greift Messing an und bildet Zinkchlorid. Dieses wiederum ist sehr stark hygroskopisch und entzieht seiner Umgebung Wasser. Konzentrierte Zinkchloridlösungen aber auch solche von ammoniakalischem Kupferchlorid lösen Cellulose auf. Selbst geringste Wassermengen, wie sie beispielsweise als Gleichgewichtsfeuchtigkeit im Vlies zwischen den leitenden Platten fast unvermeidlich sind, beschleunigen die obigen Vorgänge und führen somit zu den erwähnten Beschädigungen der in den Polyurethanschaum eingebetteten Sensoren der bekannten Ausführung.

Der Erfindung liegt daher die Aufgabe zugrunde, Sensoren der eingangs genannten Art so zu verbessern, dass sie erst beim Auftreten relevanter Wassermengen in flüssiger Form ansprechen, welche eindeutig von einer Leckstelle stammen, nicht aber beim Auftreten von Wasserdampf oder geringer Feuchtigkeit, insbesondere von Restfeuchtigkeit im Wärmedämmmaterial, und die ausserdem auch bei ihrer Anwendung in dem für erdverlegte thermisch isolierte Rohrleitungen üblichen Milieu, nämlich in verschäumtem Polyurethan auch nach 30-50 Jahren ihre Funktion einwandfrei erfüllen.

Zur Lösung dieser Aufgabe zeichnet sich der erfindungsgemässe Sensor dadurch aus, dass der Feuchtigkeitsfühler dampfdicht von einer Hülle aus einem hydrolisierbaren oder wasserlöslichen Material umschlossen ist.

Dabei wird unter einem hydrolisierbaren Material ein solches verstanden, das durch chemische Reaktion mit Wasser zerstörbar ist, unter einem wasserlöslichen Material entsprechend ein solches das auf physikalischem Wege durch Wasser löslich ist.

Die den Feuchtigkeitsfühler umschliessende Hülle verhindert, dass Restfeuchtigkeit, z.B. aus einer verschäumten Wärmedämmschicht, insbesondere Dampf, an die erwähnte Schicht zwischen die Platten des Feuchtigkeitsfühlers gelangt und diesen zu einem Fehlalarm verleitet. Restfeuchtigkeit aus der Verschäumung, insbesondere Dampf oder geringe Mengen kondensierten Wassers, insbesondere Kondensat in Tröpfchenform, werden durch die Hülle aufgenommen und von dieser zurückgehalten, ohne dass der Sensor anspricht. Erst bei einem ernsthaften Leck, das auch eine Störmeldung auslösen soll, d.h. wenn grössere flüssige Wassermengen zum Sensor gelangen, wird die Schutzhülle zerstört, so dass das Wasser in den Spalt zwischen den Platten gelangen kann und der Sensor anspricht. Diese Hülle bildet aber auch eine erste Barriere gegen eine Beschädigung des Feuchtigkeitsfühlers durch externe Bestandteile, insbesondere ein Eindringen von Fremdstoffen in den Spalt zwischen den Platten. Ein noch wirksamerer Schutz des Feuchtigkeitsfühlers gegen solche schädigende Einflüsse kann erreicht werden, wenn für die Hülle ein hydrolisierbarer oder wasserlöslicher Kunststoff verwendet wird, der gegen beim Verschäumen des für die wärmedämmende Isolierung meist verwendeten Polyurethanschaumes verwendeten bzw. freiwerdenden Stoffe resistent ist.

Eine besonders zweckmässige Ausführung des erfindungsgemässen Sensors ergibt sich, wenn die Hülle als ein- oder mehrteiliges hermetisch abschliessbares Gehäuse ausgebildet ist, in welches der Feuchtigkeitsfühler eingesetzt ist, wobei dann vorteilhaft das Gehäuse Mittel aufweist, die seine rasche und einfache Befestigung an einem Rohr mittels einer Drahtschlaufe oder einer Bride erlauben.

Die Hülle oder das Gehäuse können z.B. aus einem hydrolisierbaren Schaumstoff bestehen.

Eine weitere Sicherheit gegen durch Restfeuchtigkeit, insbesondere in Dampfform ausgelöste Alarme gewährleistet eine Weiterbildung, bei welcher die zwischen den Platten des Feuchtigkeitsfühlers angeordnete Schicht wasserdurchlässig ist und aus einem Material besteht, das keine Feuchtigkeit aufnimmt, wobei dann die Schicht aus einem handelsüblichen gewebeartigen Kunststoffgebilde, z.B. einem Kunststofffeingewebe aus Monofilamenten bestehen kann, das eine Struktur aufweist, die z.B. durch Kapillarwirkung Flüssigkeit in den Spalt zwischen den Platten eindringen lässt. Dadurch wird sichergestellt, dass nur in relevanten Mengen flüssig an den Spalt gelangendes Wasser eine Leckanzeige auslösen kann.

Bei Sensoren die für erdverlegte Leitungen bestimmt sind, die eine thermische Isolierung aus verschäumtem Polyurethan aufweisen, ist es zur Vermeidung der eingangs genannten Zersetzungserscheinungen besonders vorteilhaft, wenn mindestens die Oberfläche der beiden leitenden Platten aus Nichtbuntmetallen besteht, und die zwischen diesen Platten angeordnete Schicht aus einem nicht saugfähigen und nicht hygroskopischen Material besteht, das gegen die beim Verschäumen von Polyurethan verwendeten bzw. frei werdenden Stoffe resistent ist.

Dabei wird unter saugfähig die Aufnahme von Wasser durch Kapillarwirkung verstanden und unter hygroskopisch die Aufnahme von Wasser durch Adsorptionskräfte.

Die beiden leitenden Platten können dabei aus Edelstahl,Zinn oder aus einem Edelmetall bestehen. Es genügt aber bereits vollauf, wenn die gesamte Oberfläche, z.B. diejenige der bei der bekannten Ausführung verwendeten leitenden Platten mit einem Nichtbuntmetall, vorzugsweise mit Zinn oder einem Edelmetall überzogen, z.B. versilbert ist.

Die zwischen den beiden Platten angeordnete und diese voneinander isolierende Schicht ist somit so beschaffen, dass sie sich nicht mit Feuchtigkeit aus ihrer Umgebung anreichert. Das kann zweckmässig erreicht werden, wenn diese Schicht aus dem gleichen Material besteht, wie dasjenige der Wärmedämmschicht der Rohrleitung, also aus Polyurethanhartschaum. Dadurch wird die Ansprechgrenze des Sensors erst dann erreicht, wenn seine ganze Umgebung so durchnässt ist, dass ein Alarm erforderlich ist.

Um bei einer im externen Mess-, Anzeige- oder Alarmgerät, das sich in der Regel in einer zentralen Ueberwachungsstelle befindet, angezeigten Leck das Auffinden der Leckstelle im Gelände zu erleichtern, wird erfindungsgemäss weiter vorgeschlagen, den Sensor mit einem Signalgebergerät, z.B. einem Summer, einem Signaltonerzeuger oder einem Minisender zu einem Bauteil zu verbinden, wobei dieses Signalgebergerät durch das Lecksignal gleichzeitig mit dem externen Mess-, Anzeige- oder Alarmgerät ausgelöst wird. Durch geeignete, auf das Gerät abgestimmte Empfangsgeräte kann dann aufgrund der angenäherten Angaben des externen Mess-, Anzeige- oder Alarmgerätes die Stelle des leckanzeigenden Sensors im Gelände präzis geortet werden, wodurch grössere Freilegungsarbeiten vermieden werden können.

Die Erfindung wird im Folgenden anhand von Ausführungsbeispielen mit Bezug auf die Zeichnung näher erläutert.

Es zeigt:

Fig. 1 einen an einem Mediumrohr befestigten Sensor teilweise geschnitten, und

Fig. 2 eine zur Fig. 1 um eine vertikale Achse um 90° gedrehte Ansicht des Sensors ebenfalls teilweise geschnitten.

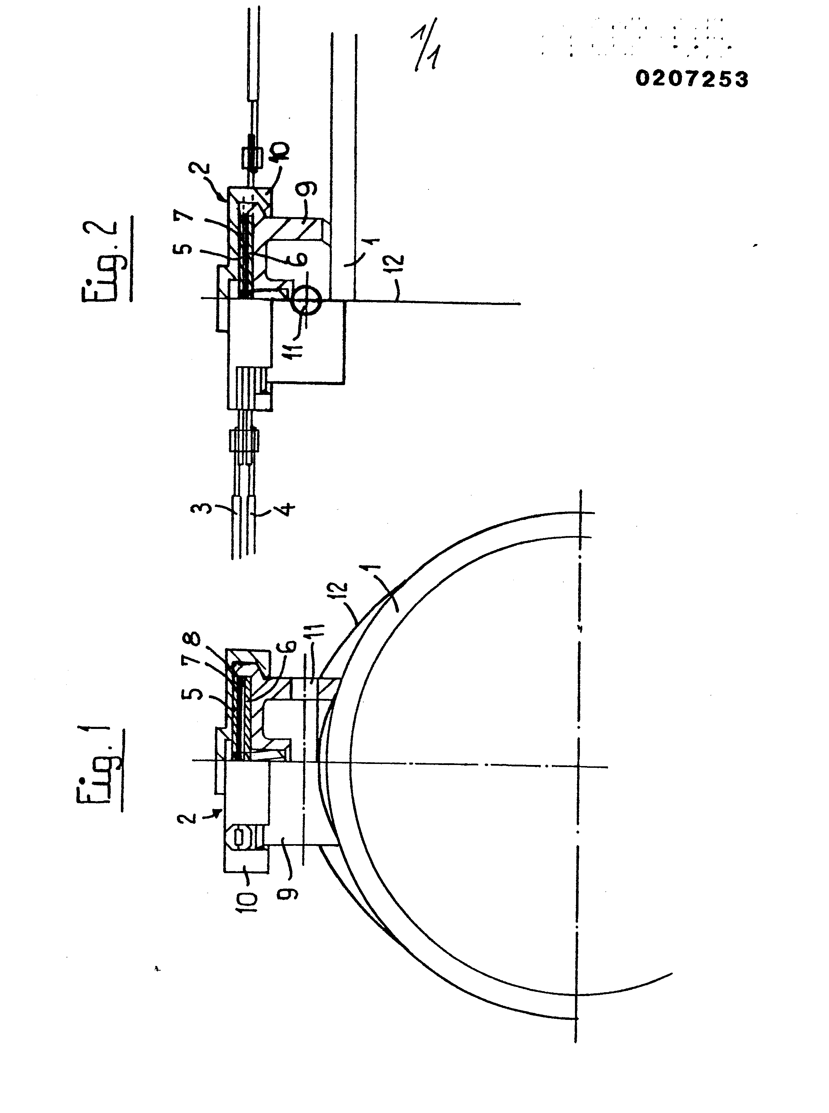

Mit 1 ist das mediumführende Innenrohr, in der Regel ein Stahlrohr, z.B. einer erdverlegten Fernwärmeleitung bezeichnet. Dieses Rohr 1 verläuft koaxial mit Zwischenraum in einem nicht dargestellten Mantelrohr, gewöhnlich ein Kunststoffrohr und der ringförmige Zwischenraum zwischen dem Mantelrohr und dem Innenrohr 1 ist durch eine ebenfalls nicht dargestellte, z.B. eingeschäumte Wärmedämmung, heute meist aus Polyurethanschaum fugenlos und homogen ausgefüllt. Abschnitte solcher Isolierrohre werden vorfabriziert mit über das Mantelrohr und die Isolation vorstehenden Enden des Innenrohrs 1 auf die Baustelle verbracht und dort z.B. in entsprechende im Erdreich ausgehobene Gräben verlegt. An der Stossstelle zweier miteinander zu verbindender Isolierrohrabschnitte werden zuerst die vorstehenden Enden der beiden Innenrohre durch eine Schweissnaht miteinander verbunden und die Schweissung durch eine Druckprobe geprüft. Danach wird die Wärmedämmung ergänzt und, z.B. durch Ueberschieben einer die angrenzenden Mantelrohrenden überlappenden Muffe abgedeckt. Um die Signalisierung und Ortung von Nassstellen in der wärmedämmenden Schicht derart verlegter Rohrleitungen zu ermöglichen, werden in regelmässigen Abständen, z.B. alle 6, 12 oder 18 m vorzugsweise an den Verbindungsstellen Sensoren 2 in die Wärmedämmung eingebettet. Diese sind über elektrische Leitungsdrähte 3, 4, die zweckmässig bereits bei der Herstellung der Isolierrohre mit in die Isolierung eingeschäumt und an geeigneten Stellen ins Freie geführt werden, an eine externes Mess-, Anzeige- oder Alarmgerät (nicht dargestellt) angeschlossen.

Jeder der Sensoren 2 umfasst einen Feuchtigkeitsfühler, welcher zwei Platten 5 und 6 aus elektrisch leitendem Material umfasst, die je an eine der beiden Leitungen 3 bzw. 4 angeschlossen sind und die durch eine Zwischenschicht 7 aus elektrisch isolierendem Material unter Bildung eines engen Spalts 8 elektrisch voneinander getrennt sind. Wird die elektrische Isolation zwischen den Platten 5, 6 z.B. durch in den Spalt eindringendes Wasser überbrückt, wird der in diesem Sensor 2 entstandene Nebenschluss über die Leitungen 3, 4 vom Mess- und Anzeigegerät angezeigt und geortet.

Damit dies nicht bereits eintritt, wenn geringe unbedenkliche Feuchtigkeitsmengen, z.B. aus dampfförmiger Restfeuchtigkeit des eingeschäumten wärmedämmenden Materials, in den Spalt 8 zwischen den Platten 5, 6 gelangen indem sie beispielsweise durch die Zwischenschicht 7 aufgesogen werden, ist gemäss der Erfindung vorgesehen, dass die Zwischenschicht aus einem nicht saugfähigen und nicht hygroskopischem Material besteht, das selbst keine Feuchtigkeit aufnimmt und das ausserdem gegen die beim Verschäumen von Polyurethan verwendeten bzw. frei werdenden Stoffe resistent ist. Die Schicht 7 ist aber so wasserdurchlässig, dass an den Spalt 8 gelangendes Wasser in flüssiger Form in diesen eintritt und dadurch eine Leckanzeige auslösen kann. Geeignete gewebeartige Kunststoffgebilde, z.B. Kunststofffeingewebe aus Monofilamenten mit einer Struktur, die bei Verwendung eines solchen Materials für die Zwischenschicht 7 beispielsweise durch Kappilarwirkung Flüs- sigkeit in den Spalt 8 zwischen den Platten 5, 6 eindringen lässt sind im Handel erhältlich und brauchen daher hier näher erläutert zu werden. Die Schicht 7 kann auch aus dem gleichen Material bestehen, wie dasjenige der Wärme- dämmschicht der Rohrleitung.

C207253

Um bei Verwendung von verschäumtem Polyurethan für die Wärmedämmung der isolierten Leitung Zersetzungserscheinungen der eingangs geschilderten Art auch nach Jahrzehnten noch wirksam zu verhindern, ist ferner erfindungsgemäss vorgesehen, dass mindestens die Oberfläche der beiden leitenden Platten 5,6 aus Nichtbuntmetallen besteht. Die beiden Platten 5,6 können hierbei aus Edelstahl, Zinn oder aus einem Edelmetall, z.B. Silber bestehen oder es kann die gesamte Oberfläche der beiden leitenden Platten 5,6 mit einem Nichtbuntmetall, vorzugsweise mit Zinn oder einem Edelmetall beschichtet, z.B. versilbert sein.

Diese erfindungsgemässe Beschaffenheit der leitenden Platten aus einem Metall, welches mit dem Schaum oder den in diesem enthaltenen oder gelösten Stoffen, wie Freone und Aminen, weder reagiert noch katalytische Wirkung auf die Zerstörung dieses Stoffes hat, gewährleistet eine praktisch unbeschränkte Lebensdauer des Feuchtigkeitsfühlers.

Um aber zu verhindern, dass unbedeutende Feuchtigkeitsmengen insbesondere in Dampfform aber auch als tröpfchenförmiges Kondensat überhaupt an den durch die Platten 5, 6 und die Zwischenschicht 7 gebildeten Feuchtigkeitsfühler gelangen und einen Fehlalarm auslösen können, ist erfindungsgemäss der ganze Feuchtigkeitsfühler dampfdicht von einer Hülle aus hydrolisierbarem oder wasserlöslichem Material umschlossen.

Im dargestellten Beispiel ist diese Hülle durch ein Gehäuse 9 gebildet, das durch einen Schnappdeckel 10 hermetisch abschliessbar ist und in welchem der Feuchtigkeitsfühler 5, 6, 7 wie dargestellt eingebettet ist. Die elektrischen Zuleitungen 3, 4 zum Feuchtigkeitsfühler sind ebenfalls dampfdicht durch den Deckel 10 eingeführt. Ersatzweise sind auch entsprechend ausgebildete einteilige Gehäuse oder solche aus mehr als zwei Teilen denkbar.

0207253

Das Gehäuse weist eine durchgehende Oeffnung 11 auf,
durch welche ein Draht 12, eine Bride oder dgl. durchgeführt werden kann um den Sensor 2 wie dargestellt an
der Aussenfläche des Innenrohres 1 zu befestigen.

Für das Gehäuse 9 und den Deckel 10 oder für eine anders
geartete Hülle zum dampfdichten Umschliessen des Feuchtigkeitsfühlers eignet sich ein beliebiger, im Handel
erhältlicher und in geeigneter Weise verarbeitbarer,
wasserlöslicher oder hydrolisierbarer Kunststoff. Bevorzugt werden jedoch aus den verfügbaren Kunststoffen mit
diesen Eigenschaften für die Herstellung des dargestellten
Gehäuses 9 mit Deckel 10 oder der Hülle solche ausgewählt,
die zusätzlich gegen die Stoffe, die beim Verschäumen
von Polyurethan, also beim Herstellen der Rohrisolierung
verwendet, bzw. frei werden resistent sind, z.B. hydrolisierbares Schaummaterial, sodass die Hülle und insbesondere dann der Feuchtigkeitsfühler durch solche Stoffe
nicht beschädigt werden können.

Um die präzise Ortung einer Leckstelle im Gelände ohne
aufwendige Grabarbeiten zu ermöglichen, ist schliesslich
erfindungsgemäss vorgeschlagen, dass der Sensor mit einem
handelsüblichen Signalgebergerät, z.B. einem Summer,
einem Signaltonerzeuger, einem Minisender oder dergleichen
zu einem Bauteil vereinigt in die Wärmedämmschicht eingeschäumt wird. Die elektrische Speisung dieses Signalgebergerätes kann dabei durch den Sensorstromkreis mit übernommen werden und die Auslösung des Signalgebergerätes ist
mit der Leckanzeige gekoppelt, die auch das externe Mess-,
Anzeige- oder Alarmgerät auslöst. Während letzteres im
besten Falle nur eine angenäherte Lokalisierung der Leckstelle erlaubt, ermöglicht dann ein solches Signalgebergerät mittels geeigneter Empfänger seiner Signale an Ort
und Stelle die Lage des anzeigenden Sensors im Gelände
sehr genau zu orten.

Die erfindungsgemäss vorgeschlagenen Massnahmen lösen
somit bei aller Einfachheit die Erfindungsaufgabe einen
Sensor zu schaffen, der auch nach 30 - 50 Jahren oder
länger noch unverändert wie am ersten Tag seine Funktion
zuverlässig ausübt.

**PATENTANSPRUECHE**

1. Sensor zum Feststellen von Nassstellen in thermischen Isolierungen von Rohrleitungen, mit einem zur Verbindung mit einem externen Mess-, Anzeige- oder Alarmgerät bestimmten Feuchtigkeitsfühler aus zwei elektrisch leitenden Platten, die zwischen sich einen Spalt begrenzen, in welchem eine Schicht angeordnet ist, die in trockenem Zustand die Platten elektrisch voneinander isoliert, während in den Spalt eindringende Feuchtigkeit die Platten elektrisch leitend verbindet und dadurch eine Leckanzeige auslöst, dadurch gekennzeichnet, dass der Feuchtigkeitsfühler (5,6,7) dampfdicht von einer Hülle (9,10) aus einem hydrolisierbaren oder wasserlöslichen Material umschlossen ist.

2. Sensor nach Anspruch 1, dadurch gekennzeichnet, dass die Hülle als ein- oder mehrteiliges, hermetisch abschliessendes Gehäuse (9) zur Aufnahme des Feuchtigkeitsfühlers (5,6,7) ausgebildet ist.

3. Sensor nach Anspruch 2, dadurch gekennzeichnet, dass das Gehäuse (9,10) Mittel aufweist, die seine Befestigung an einem Rohr (1) mittels einer Drahtschlaufe (12) oder Bride erlauben.

4. Sensor nach einem der Ansprüche 1 bis 3, dadurch gekennzeichnet, dass die Hülle bzw. das Gehäuse (9,10) aus einem hydrolisierbaren oder wasserlöslichen Kunststoff besteht, der gegen beim Verschäumen von Polyurethanschaum verwendete bzw. freiwerdende Stoffe resistent ist.

5. Sensor nach einem der Ansprüche 1 bis 3, dadurch gekennzeichnet, dass die Hülle oder das Gehäuse (9,10) aus hydrolisierbarem Schaumstoff besteht.

6. Sensor nach einem der Ansprüche 1 bis 5, dadurch gekennzeichnet, dass die zwischen den Platten (5,6) des Feuchtigkeitsfühlers angeordnete Schicht (7) wasserdurchlässig ist und aus einem Material besteht, das keine Feuchtigkeit aufnimmt.

7. Sensor nach Anspruch 5, dadurch gekennzeichnet, dass die Schicht (7) aus einem gewebeartigen Kunststoffgebilde z.B. einem Kunststofffeingewebe aus Monofilamenten besteht mit einer Struktur, die Flüssigkeit in den Spalt (8) zwischen den Kontaktplatten eindringen lässt.

8. Sensor nach einem der Ansprüche 1 bis 5, für erdverlegte Leitungen mit aus verschäumtem Polyurethan bestehender thermischer Isolierung, dadurch gekennzeichnet, dass mindestens die Oberfläche der beiden leitenden Platten (5,6) aus Nichtbuntmetallen besteht, und dass die zwischen diesen Platten (5,6) angeordnete Schicht (7) aus einem nicht saugfähigen und nicht hygroskopischen Material besteht, das gegen die beim Verschäumen von Polyurethan verwendeten bzw. frei werdenden Stoffe resistent ist.

9. Sensor nach Anspruch 8, dadurch gekennzeichnet, dass die beiden leitenden Platten (5,6) aus Edelstahl, Zinn oder aus einem Edelmetall, z.B. aus Silber bestehen.

10. Sensor nach Anspruch 8, dadurch gekennzeichnet, dass die gesamte Oberfläche der beiden leitenden Platten (5, 6) mit einem Nichtbuntmetall, vorzugsweise mit Zinn oder einem Edelmetall beschichtet, z.B. versilbert sind.

11. Sensor nach Anspruch 10, dadurch gekennzeichnet, dass die zwischen den Platten angeordnete Schicht (7) aus dem gleichen Material besteht wie dasjenige der Wärmedämmschicht der Rohrleitung.

12. Sensor nach einem der Ansprüche 1 bis 11, dadurch
    gekennzeichnet, dass er mit einem Signalgebergerät,
    z.B. einem Summer, einem Signaltonerzeuger oder einem
    Minisender zu einem Bauteil verbunden ist, wobei
    dieses Signalgebergerät durch das Lecksignal gleichzeitig mit dem externen Mess-, Anzeige- oder Alarm-
    gerät ausgelöst wird.

Fig.1

Fig.2

1/1

0207253

**Europäisches Patentamt**

# EUROPÄISCHER RECHERCHENBERICHT

## EINSCHLÄGIGE DOKUMENTE

EP 86106055.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,A | GB - A - 2 151 059 (RUNE HELMERSSON) <br> * Totality * <br> --- | 1 | G 01 N 27/12 <br> G 01 M 3/40 |
| A | GB - A - 2 132 773 (BICC) <br> * Abstract; claims * <br> --- | 1,2,4 | |
| A | GB - A - 1 455 415 (RASMUSSEN) <br> * Totality * <br> --- | 1 | |
| A | GB - A - 1 311 472 (RASMUSSEN) <br> * Page 1, line 9- line 66; <br> page 2, line 31- line 114; claims; <br> fig.1-4 * <br> --- | 1 | |

### RECHERCHIERTE SACHGEBIETE (Int. Cl.4)

G 01 M 3/00

G 01 N 27/00

G 08 B 21/00

G 08 B 23/00

Der vorliegende Recherchenbericht wurde für alle Patentansprüche erstellt.

| Recherchenort | Abschlußdatum der Recherche | Prüfer |
|---|---|---|
| WIEN | 10-09-1986 | ERBER |